# EUROPÄISCHE PATENTSCHRIFT

(11) **EP 2 731 838 B1**
(45) Veröffentlichungstag und Bekanntmachung des Hinweises auf die Patenterteilung: **12.09.2018**
(21) Anmeldenummer: 12733732.7
(22) Anmeldetag: 11.07.2012
(51) Int. Cl.: B60T 13/72

(54) **PNEUMATISCHER BREMSKRAFTVERSTÄRKER**
PNEUMATIC BRAKE BOOSTER
SERVOFREIN PNEUMATIQUE

(30) Priorität: 11.07.2011 DE 102011078940
(43) Veröffentlichungstag der Anmeldung: 21.05.2014
(73) Patentinhaber: Continental Teves AG & Co. oHG, 60488 Frankfurt (DE)
(72) Erfinder: RÜFFER, Manfred, 65843 Sulzbach (DE); KRÄMER, Horst, 65462 Ginsheim-Gustavsburg (DE)
(86) Internationale Anmeldenummer: PCT/EP2012/063591
(87) Internationale Veröffentlichungsnummer: WO 2013/007752

(56) Entgegenhaltungen:
- WO-A1-02/098718

## Beschreibung

Die Erfindung betrifft einen pneumatischen Bremskraftverstärker für Kraftfahrzeugbremsanlagen mit den Merkmalen vom Oberbegriff von dem unabhängigen Anspruch 1.

### Stand der Technik:

Pneumatische Bremskraftverstärker für Kraftfahrzeugbremsanlagen und deren Funktion sind grundsätzlich bekannt. Für einen ordnungsgemäßen Betrieb einer Kraftfahrzeugbremsanlage ist es regelmäßig erforderlich, eine Positionserfassung von Betätigungskomponenten durchzuführen und einen Bremswunsch eines Kraftfahrzeugführers zu erfassen. Hierfür sind Wegsensoranordnungen zum Erfassen von Position und Bewegung einer beweglichen Wand innerhalb eines Verstärkergehäuses bekannt.

Ferner ist es oft notwendig, ein Druckniveau innerhalb einer Unterdruckkammer des Bremskraftverstärkers zu überwachen, um beispielsweise ein Überschreiten eines sicherheitsrelevanten Druckwertes zu erkennen oder zu verhindern, indem beispielsweise eine autonom angetriebene Unterdruckquelle aktiviert oder ein Ausgehen eine mit einem Start&Stop-System ausgestatteten Verbrennungsmotors verhindert wird. Hierfür ist eine Verwendung von Drucksensoranordnungen zur Überwachung von einem Druckniveau in einer oder mehreren Unterdruckkammern bekannt. Die genannten Sensoranordnungen werden an die Unterdruckkammer angeschlossen, benötigen vakuumdichte Schnittstellen am Verstärkergehäuse, elektrische Zuleitungen, und belegen Bauraum innerhalb und außerhalb des Verstärkergehäuses. Einsatz von beiden genannten Sensoranordnungen am Bremskraftverstärker erhöht Kosten, Montageaufwand und Proliferation von Verstärkergehäusen.

So ist beispielsweise aus WO 02/098718 A1 ein gattungsgemäßer Bremskraftverstärkers bekannt, welcher in seinem Gehäuse zwei in radiale Richtung voneinander versetzt angebrachte Durchbrüche mit den darin angeordneten Sensoranordnungen aufweist, von denen eine Sensoranordnung zur Messung von Unterdruck und die andere zur Sensierung der Stellung der beweglichen Wand vorgesehen sind. Beide Sensoranordnungen sind dabei aufwändig über separate Steckverbindungen und Leitungen mit einer Steuereinheit verbunden.

### Aufgabe der Erfindung

Aufgabe der Erfindung ist es daher eine bauraum-, kosten- und montageoptimierte Lösung mit einer Druck- und Positionsüberwachung und unter Vermeidung von Nachteilen aus dem Stand der Technik vorzuschlagen.

### Lösung der Aufgabe

Die Aufgabe wird erfindungsgemäß mit den kennzeichnenden Merkmalen von dem unabhängigen Anspruch 1 gelöst, indem eine Wegsensoranordnung und eine Drucksensoranordnung synergetisch in einem gemeinsamen Modulgehäuse zusammengefasst angeordnet werden. Unteransprüche geben weitere mögliche vorteilhafte Ausgestaltungen an.

### Vorteile der Erfindung

Durch eine erfindungsgemäße Zusammenfassung von der Wegsensoranordnung und der Drucksensoranordnung in einem gemeinsamen Modulgehäuse ergibt sich der Vorteil einer erheblichen Bauraumeinsparung. Ferner wird die Anzahl erforderlicher vakuumdichter Schnittstellen zum Verstärkergehäuse halbiert und Montageaufwand sowohl in der Herstellung von Bremskraftverstärker als auch in der Fahrzeugendfertigung erheblich verringert.

Eine Fixierung des Modulgehäuses kann vorzugsweise an dem Gehäuse des Bremskraftverstärkers erfolgen, indem ein beispielsweise als ein Stutzen ausgebildetes Teil des Modulgehäuses in einen geeigneten Aufnahmesitz mit einem Durchgangsloch zur Unterdruckkammer am Gehäuse des Bremskraftverstärkers eingeschoben und vakuumdicht sowie verdrehsicher fixiert wird. Die Fixierung kann beispielsweise durch einen quer einsteckbaren Haltestift erfolgen, oder auch durch weitere Befestigungsmöglichkeiten beispielsweise ein Schraubverschluss, ein Bajonettverschluss, eine elastomere Führungshülse, eine Fixierung mit Schrauben, Sprengringen, Splinten und/oder durch weitere Verbindungselemente. Dadurch ist eine vorteilhaft einfache, schnelle und sichere Montage und Demontage, beispielsweise im Servicefall möglich, Montagefehler werden vermieden.

Als Dichtelement kann beispielsweise ein O-Ring, eine Flachdichtung, eine Formdichtung oder eine Flüssigdichtung eingesetzt werden.

Des Weiteren ergeben sich überraschend positive Synergieeffekte, beispielsweise Verwendung von gleichen oder gemeinsamen Komponenten durch beide Sensoranordnungen, eine erhöhte Funktionskonzentration und Integration. Insgesamt führt dies zu erheblichen Kostenvorteilen.

Gemäß einer Weiterbildung der Erfindung ist innerhalb des Modulgehäuses eine Messkammer mit einem Boden, einer Wandung und eine Durchtrittsfläche zur pneumatischen Anbindung der Messkammer an mindestens eine Unterdruckkammer vorgesehen. Dadurch wird auf eine vorteilhafte Weise ein Raumabschnitt zum konzentrierten Anordnen von Geber- und Sensorelementen der beiden Sensoranordnungen bereitgestellt.

In einer ersten vorteilhaften Ausführungsform kann ein Teilbereich der Wandung der Messkammer elastisch verformbar ausgeführt sowie der Boden und die Wandung außenseitig zumindest teilweise mit einem Umgebungsatmosphärendruck beaufschlagt werden, wodurch der elastische Teilbereich der Wandung sich abhängig von Druckniveau in der Messkammer verformen und der Boden dadurch druckproportional verschieben kann. Hierbei kann der elastische Teilbereich der Wandung beispielsweise kostengünstig, robust und dauerhaltbar als ein Metallfaltenbalg oder besonders präzise und schnellreagierend als ein Elastomerbalg gestaltet werden, wobei auch weitere Ausführungen vorstellbar sind, ohne die Erfindung zu verlassen.

In einer weiter hin vorteilhaften Weiterbildung der Erfindung kann ein der Wegsensoranordnung zugeordneter erster Stellungsgeber derart angeordnet sein, dass er entlang einer Betätigungsrichtung des Bremskraftverstärkers und somit entlang der Bewegungsrichtung der bewegten Wand verschiebbar ist und durch die Durchtrittsfläche in die Messkammer hineinragen kann. Hierbei kann der erste Stellunggeber mit einem ihm zugeordneten ersten Sensorelement berührungslos derart zusammenwirken, dass eine zuverlässige Erkennung sowohl kleiner als auch größerer Verschiebungen der bewegten Wand innerhalb des Modulgehäuses möglich wird.

Vorzugsweise kann der erste Stellungsgeber an einem Ende eines beispielsweise stabförmigen Trägerelements angeordnet sein, wobei das andere Ende des Trägerelements an der beweglichen Wand fixiert oder abgestützt oder angelehnt sein kann, so dass der erste Stellungsgeber verzögerungsfrei und an Bewegungen der beweglichen Wand gekoppelt verschoben wird, wodurch Positionen der beweglichen Wand exakt registriert werden können.

In einer anderen besonders vorteilhaften Ausführungsform kann das Trägerelement wenigstens zwei aneinander beweglich geführte, vorzugsweise teleskopierbar ausgebildete Trägerbauteile mit einem zwischen den Trägerbauteilen vorgespannt angeordnetem elastischen Element, beispielsweise eine Spiralfeder, aufweisen. Eine Verschiebung eines Trägerbauteils in die Messkammer hinein kann dadurch begrenzt werden, ohne eine weitere Verschiebung des zweiten Trägerbauteils in die gleiche Richtung zu behindern. Hierdurch kann vorteilhafterweise eine besonders kurze raumsparende oder abgewinkelte Messkammer und dadurch ein besonders kompaktes Modulgehäuse auch bei großen Verschiebewegen der beweglichen Wand realisiert werden. Das elastische Element kann dabei bei einer rückwertigen Bewegung der beweglichen Wand, beispielsweise nach einem Bremsvorgang, eine zwangsweise Rückstellung des Trägerelements bis in seine Ausgangslage gewährleisten.

In einer weiteren vorteilhaften Weiterbildung der ersten Ausführungsform kann ein der Drucksensoranordnung zugeordneter und mit einem zweiten Sensorelement berührungslos zusammenwirkender zweiter Stellungsgeber an das druckproportional verschiebbare Boden der Messkammer gekoppelt oder an diesem angeordnet vorgesehen sein. Hierdurch kann die druckproportionale Bewegung beziehungsweise Position des verschiebbaren Bodens der Messkammer mit zuverlässig registriert und daraus das zu überwachende Druckniveau in der Unterdruckkammer einfach abgeleitet werden.

In einer anderen Ausführungsform der Erfindung kann jedoch genauso ein druckempfindlicher Sensor zum Detektieren von einem Druckniveau in der Messkammer eingesetzt werden, was eine direkte präzise und schnelle Druckmessung erlaubt, vorteilhafterweise ohne dass eine weitere Schnittstelle oder ein weiterer Anschluss an die Unterdruckkammer erforderlich sind. In dieser Ausführungsform kann die Messkammer zudem besonders einfach, starr gestaltet sein, so dass sie zu einer einfach herstellbaren Ausnehmung im Modulgehäuse wird.

In einer besonders vorteilhaften Weiterbildung der Erfindung ist es möglich, das erste, dem ersten Stellungsgeber für Wegmessung zugeordnetes Sensorelement und das zweite, dem zweiten Stellungsgeber zur Druckbestimmung zugeordnetes Sensorelement durch dessen nahe räumliche Anordnung an einer gemeinsamen Leiterplatte innerhalb des Modulgehäuses zu platzieren. Hierdurch vereinfacht sich die Herstellung der erforderlichen Elektronikkomponenten, wobei es möglich wird, elektronische Komponenten teilweise durch beide Sensorelemente gemeinsam zu nutzen und dadurch ihre über beide Sensoranordnungen kumulierte Gesamtzahl zu reduzieren.

Genauso kann jedoch auch der druckempfindliche Sensor neben dem ersten Sensorelement an einer gemeinsamen Leiterplatte angeordnet sein ohne die Erfindung zu verlassen.

Vorzugsweise können dabei das erste und das zweite Stellungsgeber als Magnetelemente zum Aussenden eines elektromagnetischen Feldes und das erste und das zweite Sensorelement als zuverlässige und schnelle Hallelemente zum Erzeugen einer magnetfeldabhängigen elektrischen Spannung ausgeführt sein.

Es sind jedoch weitere vorteilhafte Abwandlungen möglich, beispielsweise können die Stellungsgeber als einfache, robuste sowie kostengünstige induktive Metallelemente und die Sensorelemente als induktive Spulen oder induktive Leiterschleifen ausgeführt sein. Eine vorteilhafte Anordnung von Sensorelementen an einer gemeinsamen Leiterplatte ist auch in diesem Fall unter Beibehaltung vorstehen beschriebener Vorteile möglich.

Dabei können die Stellungsgeber beispielsweise ringförmig, stiftförmig, quaderförmig, plattenförmig oder mit komplexeren Außenformen gestaltet sein, ohne die Erfindung zu verlassen.

Ebenso können bei den vorstehen beschriebenen möglichen Ausführungen sowohl der Wegsensoranordnung als auch der Drucksensoranordnung eine oder mehrere Auswerteeinheiten zum Auswerten von den durch die Sensorelemente detektierten Signalen zugeordnet und auf der gleichen Leiterplatine angebracht werden, mit Vorteil einer kosteneffektiven hochintegrierten elektronischen Komponente mit einem gegenüber von Einzellösungen verringertem Materialeinsatz. Hierbei könnten die Auswerteeinheiten als ASIC oder FGPA -Schaltkreise oder auch auf eine andere Weise ausgeführt sein.

In einer besonders vorteilhaften Weiterbildung der Erfindung werden elektrische Schnittstellen zur Weitergabe der Signale von der Wegsensoranordnung sowie Drucksensoranordnung an die elektronische Steuereinheit zusammengefasst zu einer einzigen mehrpoligen, an dem Modulgehäuse angeordneten Schnittstelle. Dies hat einen erheblichen Kostenvorteil durch eine Vereinfachung der Herstellung von Modulgehäuse, eine Vermeidung von zusätzlichen Kabelleitungen und erhebliche Bauraumeinsparungen im Motorraum des Kraftfahrzeugs.

In einem vorteilhaften Verfahren zum Betrieb einer Wegsensoranordnung und einer Drucksensoranordnung eines erfindungsgemäßen pneumatischen Bremskraftverstärkers können im ersten Schritt Messgrößen zur Bestimmung der Position und Bewegung einer zu überwachenden beweglichen Wand sowie Messgrößen zur Bestimmung eines Druckniveaus in wenigstens einer Unterdruckkammer innerhalb eines einzelnen Modulgehäuses aufgenommen und durch integrierte Auswerteeinheiten ausgewertet werden und im zweiten Schritt die ausgewerteten Messgrößen als elektrische Signale besonders vorteilhaft gebündelt über eine einzelne mehrpolige elektrische Schnittstelle sowie eine nachgeschaltete elektrische Leitung an eine elektronische Steuereinheit weitergeleitet um darin weiterverarbeitet und beispielsweise als Steuersignale an eine Warnvorrichtung, ein weiteres bremsunterstützendes Aggregat, ein Stabilitätssystem oder zu weiteren Zwecken eingesetzt werden. Auf mehrere dedizierte elektrische Schnittstellen und Leitungen kann verzichtet werden.

In einem weiteren vorteilhaften erfindungsgemäßen Verfahren kann das Druckniveau in einer Unterdruckkammer aus einer vergleichbar einfach und sicher ermittelbaren mechanischen Wegbeziehungsweise Positionsinformation zuverlässig abgeleitet werden.

Weil die Messkammer einen druckabhängig verformbaren elastischen Teilbereich der Wandung aufweist, beispielsweise ein Metallfaltenbalg oder einen Elastomerbalg oder ein weiteres elastisches Element, ist der Boden der Messkammer zwangsweise druckabhängig verschiebbar.

So wird beispielsweise ein am Boden der Messkammer befestigter Stellungsgeber zusammen mit dem Boden zwangsweise druckabhängig mitverschoben. Seine druckabhängige Stellung beziehungsweise sein Verschiebeweg relativ zu einer Ausgangsstellung kann mittels einer elektromagnetischen Interaktion mit einem Sensorelement einfach und zuverlässig erfasst werden, beispielsweise wenn der Stellungsgeber ein Magnetelement ist und ein definiertes Magnetisches Feld erzeugt und das Sensorelement als ein magnetfeldsensitives Hallelement ausgeführt ist. Abhängig von der Stellung des Stellungsgebers wird so im Hallelement durch das elektromagnetische Feld eine bestimmte elektrische Spannung erzeugt - es kann somit einer Stellung des Stellunggebers ein Spannungswert zugeordnet werden. Gleichzeitig kann man in Kenntnis einer bekannten Federkonstante des elastischen Teilbereiches der Wandung der Messkammer sowie des Umgebungsatmosphärendrucks eine druckabhängige Kräftegleichung für den Boden der Messkammer aufgestellt werden, bei welcher jeder Stellung des Bodens ein notwendiger Druckniveau in der Messkammer und somit in der zu überwachenden Unterdruckkammer zugeordnet werden kann. Damit kann aber jedem Spannungswert ein korrespondierendes Druckniveau zugeordnet werden und somit Druckinformation aus einer Weg- beziehungsweise Stellungsposition abgeleitet werden.

Dadurch kann unter Einsatz von verbreiteten und kostengünstigen Komponenten auf teure Sensoren zur direkten Druckmessung, beispielsweise Membran- oder Piezzoelementsensoren verzichtet werden. Jedoch können Sensoren zur direkten Druckmessung ebenso innerhalb der Erfindung einsetzt werden.

### Figurenbeschreibung:

Weitere Einzelheiten, Merkmale, Vorteile und Anwendungsmöglichkeiten der Erfindung gehen aus Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:

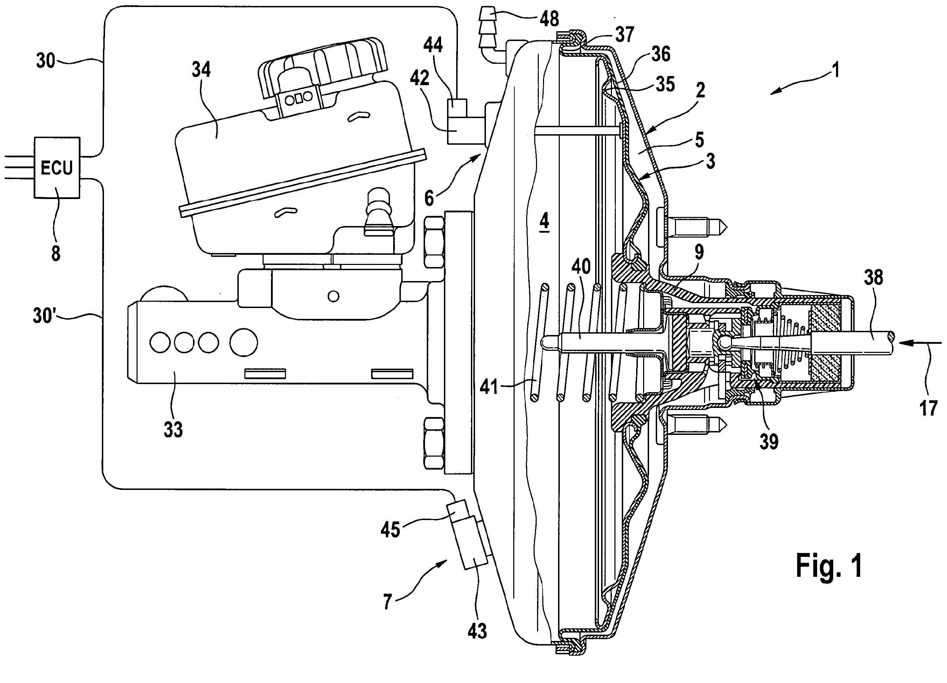

Fig. 1 einen bekannten Bremskraftverstärker mit einem Hauptbremszylinder und einem Druckmittelvorratsbehälter in Teilschnittdarstellung.
Fig. 2 Prinzipskizze einer ersten Ausführungsform des erfindungsgemäßen Bremskraftverstärkers in einer Ausgangsstellung.
Fig. 3 Prinzipskizze einer weiteren Ausführungsform des erfindungsgemäßen Bremskraftverstärkers mit einem teleskopierbaren Träger in einer Ausgangsstellung.
Fig. 4 Prinzipskizze einer dritten Ausführungsform des erfindungsgemäßen Bremskraftverstärkers mit einem Elastomerfaltenbalg in einer Ausgangsstellung.
Fig. 5 Prinzipskizze der ersten Ausführungsform des erfindungsgemäßen Bremskraftverstärkers in einer ersten Betriebsstellung.
Fig. 6 Prinzipskizze der ersten Ausführungsform des erfindungsgemäßen Bremskraftverstärkers in einer weiteren Betriebsstellung.
Fig. 7 Prinzipskizze einer weiteren Ausführungsform des erfindungsgemäßen Bremskraftverstärkers mit einem induktiven Messkonzept.
Fig. 8 Prinzipskizze einer weiteren Ausführungsform des erfindungsgemäßen Bremskraftverstärkers mit einer starren Messkammer.

Weil Funktion, prinzipieller Aufbau und Betriebsarten von gattungsgemäßen pneumatischen Bremskraftverstärkern generell bekannt sind, wird nachfolgend auf eine vollständige Funktionsbeschreibung verzichtet und selektiv auf erfindungsrelevante Bereiche eingegangen.

### Fig.1

Zeigt einen bekannten gattungsgemäßen pneumatischen Bremskraftverstärker 1 für Kraftfahrzeugbremsanlagen, mit einem Verstärkergehäuse 2, wobei an dem Verstärkergehäuse 2 ein Hauptbremszylinder 33 mit einem daran angeordneten Druckmittelvorratsbehälter 34 befestigt ist. Das Verstärkergehäuse 2 ist durch eine, mit einem pneumatischen Differenzdruck beaufschlagbare, axial bewegliche Wand 3 in eine Unterdruckkammer 4 und eine Arbeitskammer 5 unterteilt. Die axial bewegliche Wand 3 besteht aus einem beispielsweise aus Blech tiefgezogenen Membranteller 35 und einer daran anliegenden flexiblen Membran 36, die zwischen dem äußeren Umfang des Membrantellers 35 und dem Verstärkergehäuse 2 eine Rollmembran mit einer Rollfalte 37 als Abdichtung der beiden Kammern 4,5 zueinander und der beiden Kammern 4,5 gegenüber einer Umgebungsatmosphäre bildet.

Ein durch ein Eingangsglied 38 und/oder eine nicht gezeigte Fremdbetätigungsvorrichtung für eine fahrerunabhängige Betätigung betätigbares Steuerventil 39 ist in einem, im Verstärkergehäuse 2 abgedichtet geführten, die bewegliche Wand 3 tragenden Steuergehäuse 9 untergebracht und dient der Steuerung des Differentialdrucks, indem es die beiden Kammern 4,5 miteinander sowie mir der Umgebungsatmosphäre verbindenden Luftkanäle öffnet oder schließt. Hierbei kann das Eingangsglied 38 mit einem nicht dargestellten Bremspedal direkt oder beispielsweise indirekt über eine Simulatorvorrichtung verbunden sein.

Die durch den Differenzdruck verstärkte Bremskraft wird schließlich über eine Druckstange 40 auf einen nicht gezeigten Betätigungskolben des Hauptzylinders 33 zum Druckaufbau in einem am Hauptzylinder 33 angeschlossenen nicht gezeigten hydraulischen Bremssystem übertragen. Eine in der Zeichnung schematisch dargestellte Rückstellfeder 41, die sich an der unterdruckseitigen Stirnwand des Verstärkergehäuses 2 abstützt, hält die bewegliche Wand 3 in der gezeigten Ausgangsstellung.

Ferner ist auf dem Verstärkergehäuse 2 eine Wegsensoranordnung 6 zur Überwachung von Position und Bewegung der axial beweglichen Wand 3 und eine Drucksensoranordnung 7 zur Überwachung von einem Druckniveau der Unterdruckkammer 4 angeordnet. Beide Sensoranordnungen 6,7 verfügen über jeweils ein vakuumdicht gegen das Verstärkergehäuse 2 abdichtendes Sensorgehäuse 42,43 und jeweils eine elektrische Schnittstelle 44,45 zum Anbinden von elektrischen Leitungen 46,47 für die Übertragung von elektrischen Signalen zwischen den Sensoranordnungen 6,7 und einer elektronischen Steuereinheit 8. Ferner verfügt das Verstärkergehäuse über einen Vakuumstutzen 48, welcher eine zum Evakuieren der Unterdruckkammer 4 über eine nicht gezeigte Vakuumleitung und wenigstens eine an die Vakuumleitung angeschlossene Vakuumquelle, beispielsweise ein Saugrohr oder eine Vakuumpumpe, dient.

### Fig.2

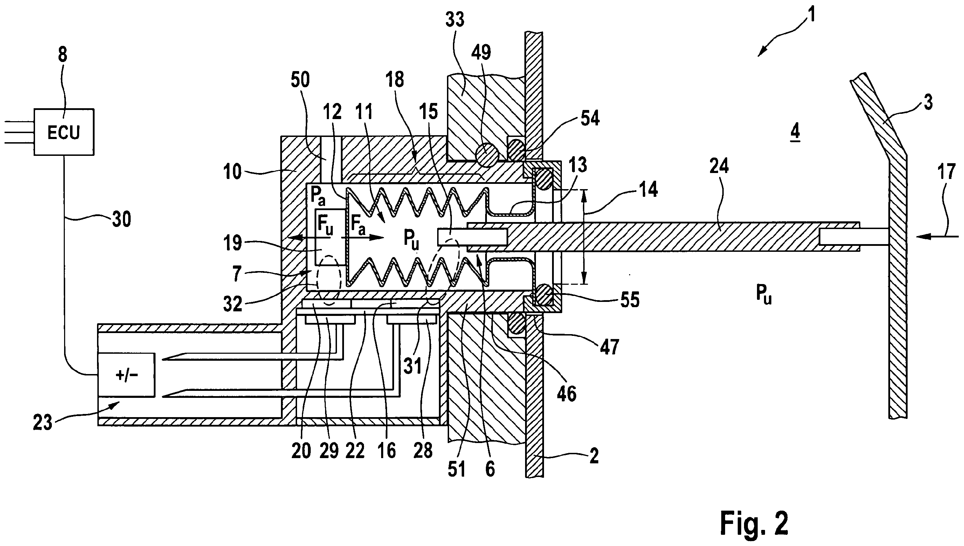

Fig.2 zeigt eine stark vereinfachte Skizze eines Ausschnittes einer ersten Ausführungsform des erfindungsgemäßen Bremskraftverstärkers 1 in einer Ausgangsstellung. Ein Modulgehäuse 10 ist ein an dem Verstärkergehäuse 2 vakuumdicht angebracht, wobei ein Stutzen 51 des Modulgehäuses 10 durch eine Durchgangsöffnung 52 in einem Flansch eines Hauptbremszylinders 33 sowie eine weitere koaxiale Durchgangsöffnung 53 in der unterdruckseitigen Wand des Verstärkergehäuses 2 hineinragt, mit einem Dichtelement 54 gegen Umgebungsatmosphäre abgedichtet und durch einen Haltestift 49 gegen Herausfallen und Verdrehen gesichert ist.

Als Dichtelement 54 kann beispielsweise ein O-Ring, eine Flachdichtung, eine Formdichtung oder eine Flüssigdichtung eingesetzt werden.

Es sind auch weitere Befestigungsmöglichkeiten des Modulgehäuses am Verstärkergehäuse vorstellbar, beispielsweise ein Schraubverschluss, ein Bajonettverschluss, eine elastomere Führungshülse, eine Fixierung mit Schrauben, Sprengringen, Splinten und/oder durch weitere Verbindungselemente.

Das Modulgehäuse 10 verfügt über eine Messkammer 11, welche durch einen Boden 12, eine Wandung 13 sowie eine Durchtrittsfläche 14 begrenzt und mittels Durchtrittsfläche 14 pneumatisch mit der Unterdruckkammer 4 verbunden ist, so dass innerhalb der Messkammer 11 jederzeit das gleiche Druckniveau Pu wie auch in der Unterdruckkammer 4 vorliegt. Ferner werden der Boden 12 und die Wandung 13 der Messkammer 11 über einen Luftkanal 50 mit einem Druckniveau Pa der Umgebungsatmosphäre beaufschlagt und ein Dichtelement 55 trennt die Unterdruckkammer 4 von der Umgebungsatmosphäre vakuumdicht ab.

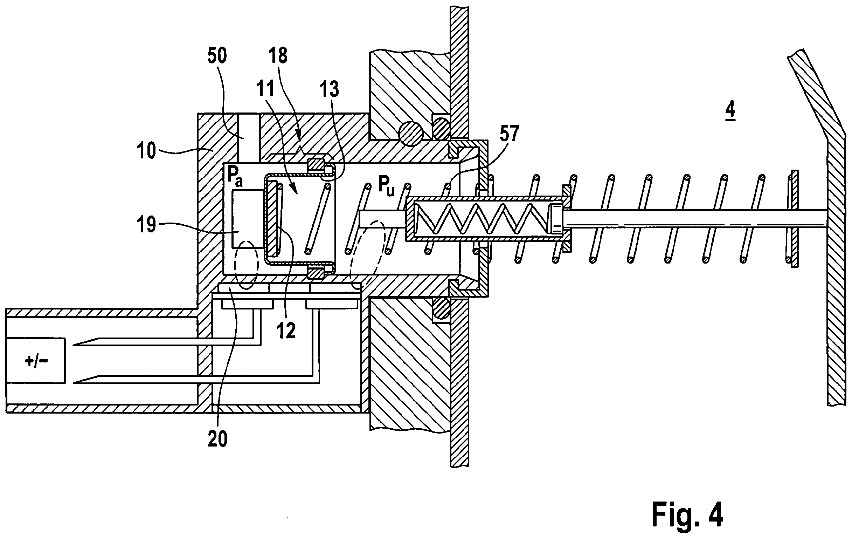

Des Weiteren ist ein Teilbereich 18 der Wandung 13 elastisch komprimierbar ausgeführt. In der gezeigten Ausführungsform ist der Teilbereich 18 als ein Metallfaltenbalg gestaltet. Als Material sind vor allem magnetfelddurchlässige Metalle und Legierungen geeignet. Weitere Ausführungsarten sind jedoch innerhalb der Erfindung ebenso möglich, beispielsweise laut Fig.4.

Dadurch weist die Messkammer 11 parallel zur Betätigungsrichtung 17 eine geringere Steifigkeit als quer zu Betätigungsrichtung, bedingt durch umlaufende Falten des Metallfaltenbalgs.

In einer Ausgangsstellung Laut Fig.2,3,4 ist das Druckniveau **Pu** in der Unterdruckkammer 4 gleich einem Druckniveau der Umgebungsatmosphäre **Pa** und am Boden 12 der Messkammer 11 herrscht ein Kräftegleichgewicht zwischen einer Atmosphärendruckkraft **Fa=Pa*Ab** und einer Unterdruckkraft **Fu=Pu*Ab,** wobei **Ab** die Querschnittsfläche des Bodens 12 darstellt. In einem solchen Zustand kann keine Bremskraftverstärkung erfolgen, der Bremskraftverstärker ist nicht bremsbereit.

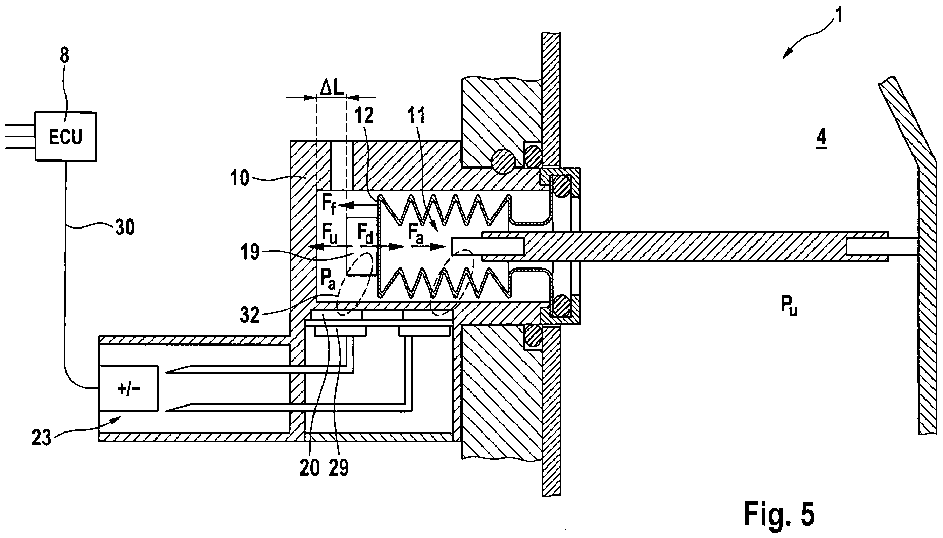

Ein bremsbereiter Betriebszustand ist am in der Fig. 5 gezeigten Ausführungsbeispiel verdeutlicht.

Innerhalb des Modulgehäuses 10 sind ferner eine Wegsensoranordnung 6 und eine Drucksensoranordnung 7 nebeneinander positioniert vorgesehen, wobei die Wegsensoranordnung 6 einen ersten Stellungsgeber 15, ein erstens Sensorelement 16 und eine Auswerteeinheit 28 umfasst. Die Drucksensoranordnung 7 umfasst analog einen zweiten Stellungsgeber 19, ein zweites Sensorelement 20, und eine weitere Auswerteeinheit 29.

Der Erste Stellungsgeber 15 ist an einem Ende eines stangenförmigen Trägerelements 24 angeordnet und ragt durch die Durchtrittsfläche 14 in die Messkammer 11 hinein. Das andere Ende des Trägerelements 24 ist an der beweglichen Wand 3 angeordnet, so dass das Trägerelement 24 bei jeder Bewegung der Wand 3 mit bewegt und dadurch der erste Stellungsgeber 15 innerhalb der Messkammer entlang der Betätigungsrichtung 17 axial verschoben wird. In der gezeigten Ausführungsform ist der erste Stellungsgeber 15 als ein stiftförmiges Magnetelement und das erste Sensorelement als ein Hallelement ausgeführt. Der erste Stellungsgeber 15 erzeugt in seiner Umgebung ein magnetisches Feld 31, welches in dem Sensorelement 16 eine feldstärkeabhängige elektrische Spannung indiziert. Die indizierte elektrische Spannung wird in der Auswerteeinheit 28 ausgewertet und als elektrisches Signal über eine elektrische Schnittstelle 23 und eine daran angeschlossene elektrische Leitung 30 an die elektronische Steuereinheit 8 weitergeleitet. Durch eine Veränderung des Abstandes zwischen dem ersten Stellungsgeber 15 und dem ersten Sensorelement 16 verändert sich die Feldstärke im Bereich des Sensorelements 16 so dass das in dem Hallelement indizierte Spannungswert sich ebenfalls verändert und somit einem bestimmten Spannungswert eine bestimmte Position des Stellungsgeber 15 und somit auch eine Position der beweglichen Wand 3 zugeordnet werden kann.

Durch eine Betätigungsrichtung ausreichend ausgedehnte oder redundante Anordnung von mehreren Hallelementen kann die Position der beweglichen Wand auch über einen längeren Verschiebeweg überwacht werden.

Der zweite Stellungsgeber 19 ist dabei außenseitig am Boden 12 der Messkammer 11 befestigt und wirkt nach dem gleichen wie vorstehend beschriebenen Prinzip mit dem dem zweiten Stellungsgeber 19 zugeordneten Sensorelement 20 zusammen.

Ferner ist der der Wegsensoranordnung 6 eine Auswerteeinheit 28 und der Drucksensoranordnung 7 eine Auswerteeinheit 29 zum Auswerten von durch die Sensorelemente 16,20 erfassten Signalen zugeordnet. Die Auswerteeinheiten können beispielsweise als ASIC oder FPGA-Schaltkreise ausgebildet sein.

Die Sensorelemente 16,20 sind an einer gemeinsamen Leiterplatte 22 angebracht, beispielsweise gelötet, gesteckt oder aufgedruckt. Ebenso sind der Wegsensoranordnung 6 und der Drucksensoranordnung 7 jeweils zugeordnete Auswerteeinheiten 28 und 29 Bestandteile der gleichen gemeinsamen Leiterplatte 22.

Jedoch ist eine für beide Sensoranordnungen gemeinsame Leiterplatte nicht zwingend notwendig, es ist ebenso möglich zwei oder mehr separate Leiterplatten oder sonstige Schaltungsträger im gleichen Modulgehäuse 10 zu integrieren.

Neben den gezeigten sind auch weitere geometrische Ausgestaltungen der Stellungsgeber 15,19 innerhalb der Erfindung selbstverständlich zulässig, beispielsweise scheiben-, ring-, segment-, quaderförmig und Weiteres.

Zur Versorgung von beiden Sensoranordnungen mit elektrischer Energie und zur Weitergabe von elektrischen Signalen sowohl von der Wegsensoranordnung (6) als auch von der Drucksensoranordnung (7) über eine elektrische Leitung 30 an die elektronische Steuereinheit (8) ist eine in das Modulgehäuse (10) integrierte elektrische Schnittstelle (23)vorgesehen.

Die elektrische Leitung 30 kann beispielsweise als ein Teil eines mit der elektronischen Steuereinheit 8 verbundenen Kabelbaums und die elektrische Schnittstelle (23) als ein weiblicher oder männlicher Stecker ausgebildet sein. Zur Erfüllung aller vorgenannten Funktionen der Schnittstelle 23 sollte diese mindestens 4-Polig ausgeführt sein.

### Fig.3

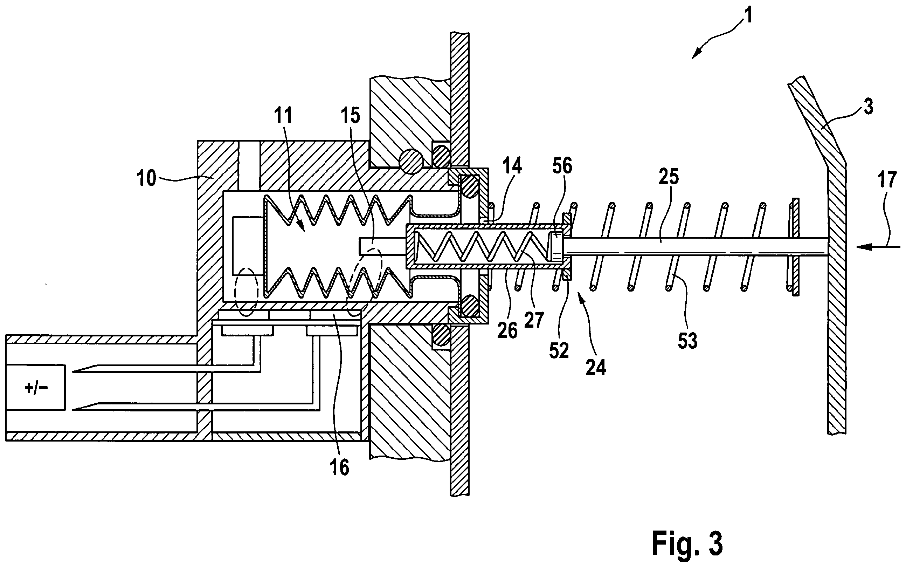

In der Fig.3 ist eine Prinzipskizze einer weiteren Ausführungsform des erfindungsgemäßen Bremskraftverstärkers 1 abgebildet. Im Unterschied zur der Ausführungsform nach Fig.2 ist das Trägerelement 24 für den ersten Stellungsgeber 15 mehrteilig teleskopierbar und somit verkürzbar gestaltet. Das Trägerelement 24 weist ein stabförmiges Trägerbauteil 25, welches an einem Ende an die bewegliche Wand 3 angelehnt und mittels der Rückstellfeder 53 gegen das Modulgehäuse 10 verspannt ist, so dass permanent ein Kontakt zwischen dem Trägerbauteil 25 und der beweglichen Wand 3 besteht und das Trägerbauteil 25 synchron mit der beweglichen Wand 3 verschoben wird. Jedoch ist auch eine direkte Fixierung des Trägerbauteils 25 an der beweglichen Wand 3 unter gleichzeitigem Verzicht auf der Rückstellfeder 53 möglich.

An seinem der beweglichen Wand 3 entgegengesetzten Ende greift das Trägerbauteils 25 in ein weiteres einseitig verschlossenes rohrförmiges Trägerbauteil 26 hinein und ist in diesem verschiebbar geführt. Dabei ist das Trägerbauteil 25 mit einem Kopfelement 56 in dem Trägerbauteil 26 gegen Herausfallen gesichert. Ein elastisches Element 27, beispielsweise eine Spiralfeder, ist zwischen den beiden Trägerbauteilen 25 und 26 vorgespannt angeordnet. Das Trägerbauteil 26 weist aussenseitig an seinem verschlossenen Ende den ersten Stellungsgeber 15 auf und ragt damit derart durch die Durchtrittsfläche 14 in die Messkammer 11 hinein, dass der erste Stellungsgeber 15 mit dem ihm zugeordneten ersten Sensorelement 16 nach dem bereits beschriebenen Prinzip zusammenwirkt.

Ferner verfügt das Trägerbauteil 26 über einen als ein umlaufender Bund gestalteten Anschlag 52, welcher die Bewegung des Trägerbauteils 26 in die Messkammer 11 hinein begrenzt, indem er sich am Modulgehäuse 10 abstützt. Wird nun die bewegliche Wand 3 beispielsweise bei einem Bremsvorgang in die Betätigungsrichtung 17 verschoben, verschieben sich beide Trägerbauteile 25 und 26 zunächst synchron mit, bis der Anschlag 52 am Modulgehäuse 10 anliegt und die Bewegung des Trägerbauteils 26 anhält. Verschiebt sich die bewegliche Wand 3 weiter in die Betätigungsrichtung 17, wird das Trägerbauteil 25 in das Trägerbauteil 26 hineingeschoben und das elastische Element 27 vorgespannt. Bei einer Rückbewegung der beweglichen Wand 3 entspannt sich das elastische Element 27 und versetzt das Trägerelement 24 in seine ursprüngliche Ausgangslänge.

Eine verkürzbare Ausführung des Trägerelements 24 ermöglicht eine in die Betätigungsrichtung 17 kompakte Bauweise der Messkammer 11 und somit des Modulgehäuses 10. Auch eine nicht gezeigte Ausführungsform mit einer sich beispielsweise quer zur Betätigungsrichtung 17 erstreckenden Messkammer 11 ist so realisierbar.

### Fig.4

Im Unterschied zu den Ausführungen nach Fig.2 und Fig.3 ist der elastisch verformbare Teilbereich 18 der Wandung 13 der Messkammer 11 als ein Elastomerbalg ausgestaltet. Der Boden 12 der Messkammer 11 ist dabei mittels eines Vorspannelements 57, beispielsweise einer Spiralfeder, im inneren der Messkammer 11 gegen das Modulgehäuse 10 verspannt abgestützt. Aussenseitig ist der Boden 12 und der elastisch verformbare Teilbereich 18 mit dem Druckniveau der Umgebungsatmosphäre **Pa** beaufschlagt, in der Messkammer 11 liegt dagegen das Druckniveau **Pu** der Unterdruckkammer 4 vor. Fällt **Pu** unter **Pa,** verschiebt sich der Boden 12 in Richtung Unterdruckkammer 4 und das Vorspannelement 57 wird vorgespannt. Gleicht sich **Pu** wieder **Pa** an, wird der Boden 12 durch das Vorspannelement 57 in seine ursprüngliche Ausgangslage zurückgeschoben. Ferner ist am Boden 12 aussenseitig der zweite Stellungsgeber 19 angeordnet, welcher somit nach dem bereits beschriebenen Prinzip mit dem ihm zugeordneten zweiten Sensorelement 20 zusammenwirken kann.

### Fig.5

Fig. 5 zeigt die Ausführungsform des erfindungsgemäßen Bremskraftverstärkers 1 entsprechend der Fig.2 jedoch in einem Bremsbereitschaftszustand mit evakuierter Unterdruckkammer 4 und hierdurch **Pu<Pa.**

Damit der Bremskraftverstärker 1 seine verstärkende Wirkung entfalten kann, muss innerhalb der Unterdruckkammer ein Druckniveau **Pu** kleiner als das Druckniveau **Pa** in der Umgebungsatmosphäre vorliegen, dabei ist das mögliche Verstärkungseffekt um so größer, je größer die Druckdifferenz **Pa-Pu** ist.

Im Fahrzeug wird die Unterdruckkammer beispielsweise durch eine angeschlossene Vakuumpumpe, einen Saugrohr eines Verbrennungsmotors oder eine weitere Unterdruckquelle evakuiert (alle nicht gezeigt), so dass in der Unterdruckkammer 4 und somit auch innerhalb der Messkammer 11 ein Druckniveau **Pu<Pa** vorliegt. Dadurch entsteht am Boden 12 der Messkammer 11 ein Kräfteungleichgewicht, bedingt durch eine Differenzkraft **Fd=Fa-Fu**, wobei **Fa>Fu**, **Fa=Pa*Ab**, **Fu=Pu*Ab**, wobei **Ab** die Querschnittsfläche des Bodens 12 darstellt.

Als Folge verschiebt sich der Boden 12 in Richtung der Differenzkraft **Fd**, die Messkammer 11 wird komprimiert. Bei einer Kompression der Messkammer entsteht jedoch eine Federkraft **Ff=c*ΔL**, wobei **Ff** proportional zu einem Verschiebeweg **ΔL** des Bodens 12 ansteigt, durch die Federsteifigkeit c des Metallfaltenbalges bedingt und entgegen der Differenzkraft **Fd** gerichtet ist. Es gilt **Fd=Fa-Fu-Ff.** Nach einem bestimmten Verschiebeweg kommt es am Boden 12 wieder zu einem Kräftegleichgewicht, **Fd=0** bzw. **Fa=Fu+Ff.** Durch den beschriebenen Zusammenhang kann jedem Verschiebeweg **ΔL** des Bodens 12 und in Kenntnis des Druckniveaus **Pa** der Umgebungsatmosphäre ein bestimmtes Druckniveau **Pu** in der Unterdruckkammer 4 zugeordnet werden.

Am Boden 12 ist der zweite Stellungsgeber 19 angeordnet, der mit dem zweiten Sensorelement 20 zusammenwirkt, indem der zweite Stellungsgeber 19 einen Magnetfeld 32 erzeugt und das zweite Sensorelement 20 die Stärke des Magnetfeldes 32 nach dem Hallprinzip registriert. Die Stärke des Magnetfeldes 32 ist jedoch abhängig von der Position des zweiten Stellungsgebers 19 relativ zum zweiten Sensorelement 20 und somit von dem Druckniveau **Pu** in der Unterdruckkammer 4. Das durch das zweite Sensorelement 20 registrierte und in eine Magnetfeldstärkeabhängige elektrische Spannung umgewandelte Signal wird durch die Auswerteeinheit 29 ausgewertet und anschließend über die elektrische Schnittstelle 23 und die daran angeschlossene elektrische Leitung 30 an die elektronische Steuereinheit 8 weitergeleitet.

Somit kann entsprechend den vorstehen beschriebenen Zusammenhängen jeder Druckdifferenz **Pa-Pu** eine bestimmte Magnetfeldstärke, somit eine bestimmte elektrische Spannung und eine Position des zweiten Stellungsgebers 19 zugeordnet und als eine Tabelle oder Kennlinie in der elektronischen Steuereinheit 8 einprogrammiert oder gespeichert werden. Dadurch kann in der Steuereinheit 8 aus der Weg- beziehungsweise Positionsinformation des Stellunggebers 19 sofort ein Differenzdruck **Pa-Pu** abgeleitet werden. In Kenntnis eines momentanen Druckniveaus **Pa** der Umgebungsatmosphäre, welches durch einen weiteren, nicht gezeigten Sensor der Steuereinheit 8 verfügbar gemacht wird, wird das Druckniveau **Pu** in der Unterdruckkammer 4 bestimmt.

### Fig.6

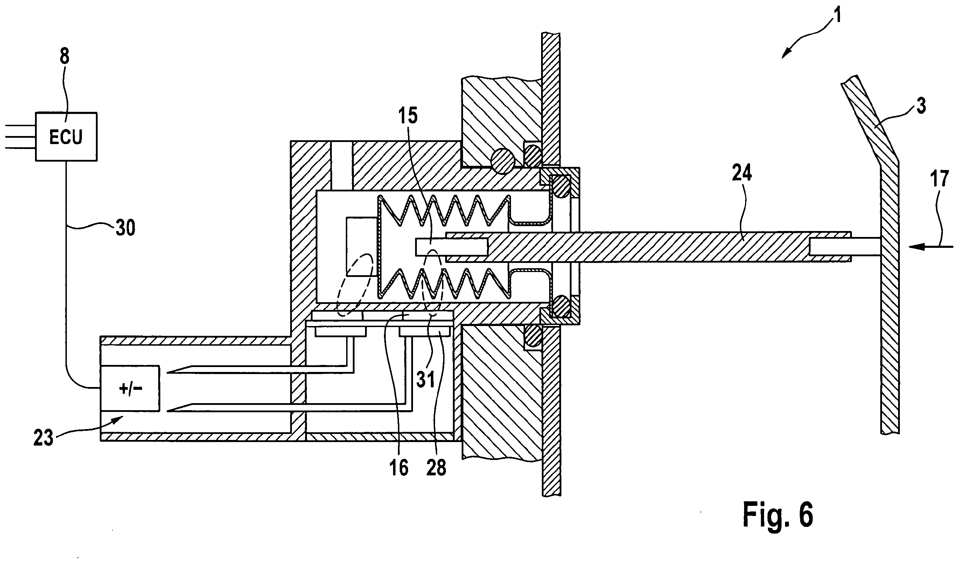

Die Prinzipskizze in der Fig.6 zeigt die Ausführungsform des erfindungsgemäßen Bremskraftverstärkers 1 nach Fig.2 bzw. Fig.5 in einer Bremsstellung mit einer, beispielsweise durch eine Pedalbetätigung oder Fremdaktivierung des Bremskraftverstärkers 1 in die Betätigungsrichtung 17 verschobene bewegliche Wand 3.

Der erste Stellungsgeber 15 ist am Trägerelement 24 angeordnet und wird durch die Verschiebung der beweglichen Wand 3 um den gleichen Verschiebeweg mit bewegt. Analog zu dem unter Fig.5 beschriebenen Messprinzip erzeugt der erste Stellungsgeber 15 ein magnetisches Feld 31, dessen Feldstärke im ersten Sensorelement 16 eine elektrische Spannung erzeugt, welche abhängig von der relativen Position des ersten Stellungsgebers 15 zum ersten Sensorelement 16 ist. Das Signal des ersten Sensorelements 16 wird analog zu dem unter Fig.5 beschriebenen verfahren anschließend durch die Auswerteeinheit 28 ausgewertet und an die Steuereinheit 8 weitergeleitet.

In Kenntnis einer Ausgangsposition des ersten Stellungsgebers 15 kann dadurch jedem im ersten Sensorelement erzeugten Spannungswert eine definierte momentane Position des ersten Stellungsgebers 15 und dadurch die Position der beweglichen Wand 3 zugeordnet werden.

### Fig.7

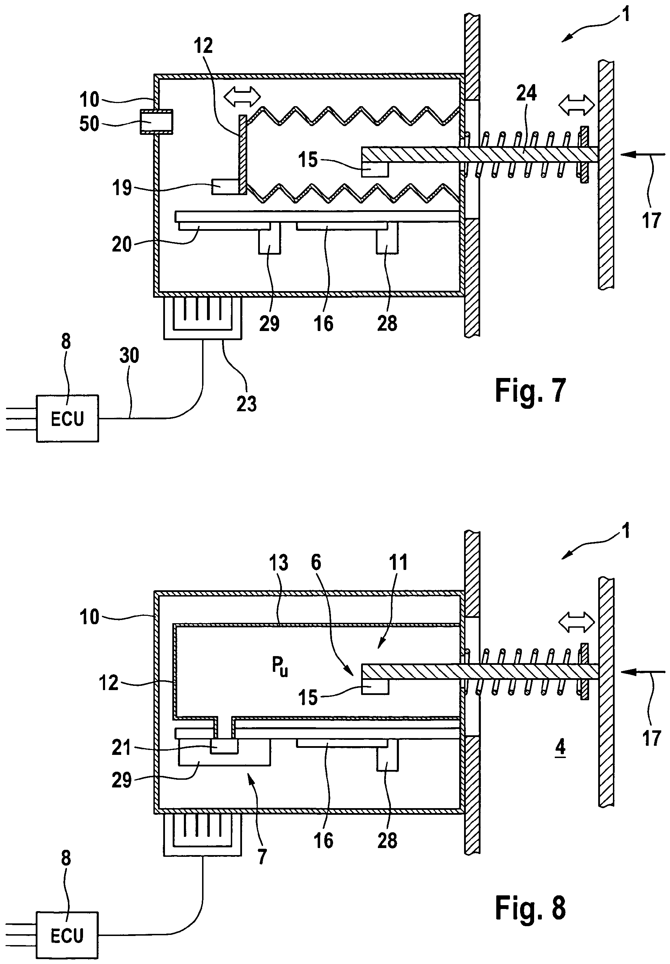

Fig.7 zeigt sehr stark vereinfacht eine Prinzipskizze einer weiteren Ausführungsform des erfindungsgemäßen Bremskraftverstärkers 1 mit einem induktiven Messkonzept.

Der erste Stellungsgeber 15 und der zweite Stellungsgeber 16 sind hier als radial außen am Boden 12 beziehungsweise Trägerelement 24 angeordnete induktiv wirksame Metallelemente, beispielsweise eisenhaltige Metallelemente ausgeführt.

Diese wirken statt mit einem Hallelement mit jeweils als elektrisch induktive stromdurchflossene Spule oder Leiterschleife ausgebildeten Sensorelementen 16,20 zusammen. Eine Verschiebung des jeweiligen Stellungsgebers 15,19 vorbei am zugeordneten Sensorelement 16,20 beeinflusst dabei die Induktivität des Sensorelements, so dass diese erfasst, ausgewertet und als für die jeweilige Stellung des Stellungebers charakteristisches elektrisches Positionssignal an die elektronische Steuereinheit 8 weitergeleitet werden kann.

### Fig.8

Die Ausführungsform unter Fig.8 weist im Unterschied zu den zuvor beschriebenen Ausführungen einen nicht komprimierbare Messkammer 11 mit einer starren Wandung 13 und einem unverschiebbar gestalteten Boden 12 auf. Die Wegsensoranordnung 6 ist dabei nach einem der vorstehend beschriebenen Konzepte mit einem Stellungsgeber 15 als Magnetelement oder induktiv wirksames Metallelement und einem zugeordneten Sensorelement 16 als ein Hallelement oder als eine elektrisch induktive stromdurchflossene Spule oder Leiterschleife gestaltet.

Die Drucksensoranordnung 7 dagegen verfügt über einen druckempfindlichen Sensor 21, welcher zur einen direkten Druckmessung geeignet ist, beispielsweise ein Membran-, ein Piezzo- oder ein weiterer Sensor mit vergleichbarer Funktionalität. Der Sensor 21 ist dabei direkt an die Messkammer 11 angeschlossen und ist dadurch in der Lage, das Druckniveau Pu innerhalb der Messkammer und somit auch der Unterdruckammer 4 unmittelbar zu erfassen. Das erfasste Signal wird durch die Auswerteeinheit 29 ausgewertet und analog zu den bereits beschriebenen verfahren an die elektronische Steuereinheit 8 weitergeleitet. Hierbei können der Sensor und die Auswerteeinheit 29 wiederum analog zu den bereits beschriebenen Ausführungen als Bestandteile einer mit dem Sensorelement 16 und der Auswerteeinheit 28 gemeinsamen Leiterplatte 22 ausgebildet oder an der Leiterplatte 22 gemeinsam angeordnet werden.

### Bezugszeichen:

- 1: Bremskraftverstärker
- 2: Verstärkergehäuse
- 3: Bewegliche Wand
- 4: Unterdruckkammer
- 5: Arbeitskammer
- 6: Wegsensoranordnung
- 7: Drucksensoranordnung
- 8: Elektronische Steuereinheit
- 9: Steuergehäuse
- 10: Modulgehäuse
- 11: Messkammer
- 12: Boden
- 13: Wandung
- 14: Durchtrittsfläche
- 15: Erster Stellungsgeber
- 16: Erstes Sensorelement
- 17: Betätigungsrichtung
- 18: Elastisch verformbarer Teilbereich
- 19: Zweiter Stellungsgeber
- 20: Zweites Sensorelement
- 21: Druckempfindlicher Sensor
- 22: Leiterplatte
- 23: Elektrische Schnittstelle
- 24: Trägerelement
- 25: Trägerbauteil
- 26: Trägerbauteil
- 27: Elastisches Element
- 28: Auswerteeinheit
- 29: Auswerteeinheit
- 30: Elektrische Leitung
- 31: Magnetisches Feld
- 32: Magnetisches Feld
- 33: Hauptbremszylinder
- 34: Druckmittelvorratsbehälter
- 35: Membranteller
- 36: Membran
- 37: Rollfalte
- 38: Eingangsglied
- 39: Steuerventil
- 40: Druckstange
- 41: Rückstellfeder
- 42: Sensorgehäuse
- 43: Sensorgehäuse
- 44: Elektrische Schnittstelle
- 45: Elektrische Schnittstelle
- 46: Elektrische Leitung
- 47: Elektrische Leitung
- 48: Vakuumstutzen
- 49: Haltestift
- 50: Luftkanal
- 51: Stutzen
- 52: Anschlag
- 53: Rückstellfeder
- 54: Dichtelement
- 55: Dichtelement
- 56: Kopfelement
- 57: Vorspannelement
- Pa: Druckniveau in einer Umgebungsatmosphäre
- Pu: Druckniveau in einer Unterdruckkammer
- Fa: Atmosphärendruckkraft
- Fu: Unterdruckkraft
- Fd: Differenzkraft
- Ff: Federkraft
- Ad: Querschnittsfläche
- ΔL: Verschiebeweg

## Patentansprüche

1. Pneumatischer Bremskraftverstärker (1), insbesondere für Kraftfahrzeugbremsanlagen, mit einem Verstärkergehäuse (2), welches durch mindestens eine, mit einem pneumatischen Differenzdruck beaufschlagbare, an einem Steuergehäuse (9) sich abstützende und entlang einer Betätigungsrichtung (13) bewegliche Wand (3) in mindestens eine Unterdruckkammer (4) und mindestens eine Arbeitskammer (5) unterteilt ist, mit einer Wegsensoranordnung (6) zur Überwachung von Position und Bewegung mindestens einer beweglichen Wand (3) und einer Drucksensoranordnung (7) zur Überwachung von einem Druckniveau in mindestens einer Unterdruckkammer (4), wobei die Wegsensoranordnung (6) und die Drucksensoranordnung (7) elektrische Signale einer elektronischen Steuereinheit (8) bereitstellen, **dadurch gekennzeichnet, dass** die Wegsensoranordnung (6) und die Drucksensoranordnung (7) in einem gemeinsamen Modulgehäuse (10) zusammengefasst angeordnet sind, wobei das Modulgehäuse (10) am Bremskraftverstärker (1) angebracht vorgesehen ist.

2. Pneumatischer Bremskraftverstärker (1) nach Anspruch 1 **dadurch gekennzeichnet, dass** innerhalb des Modulgehäuses (10) eine Messkammer (11) vorgesehen ist, wobei die Messkammer (11) einen Boden (12), eine Wandung (13) und eine Durchtrittsfläche (14) zur pneumatischen Anbindung der Messkammer (11) an mindestens eine Unterdruckkammer (4) aufweist.

3. Pneumatischer Bremskraftverstärker (1) nach Anspruch 2 **dadurch gekennzeichnet, dass** wenigstens ein Teilbereich (18) der Wandung (13) elastisch verformbar ausgeführt ist, wobei der Boden (12) in Abhängigkeit von einer Verformung des Teilbereichs (18) verschiebbar ist und wobei die Wandung (13) und der Boden (12) außenseitig zumindest teilweise mit einem Umgebungsatmosphärendruck Pa beaufschlagt sind.

4. Pneumatischer Bremskraftverstärker (1) nach Anspruch 2 **dadurch gekennzeichnet, dass** der Wegsensoranordnung (6) ein erster Stellungsgeber (15) und ein erstes Sensorelement (16) zugeordnet sind, wobei der erster Stellungsgeber (15) mit dem ersten Sensorelement (16) berührungslos zusammenwirkt und wobei der erster Stellungsgeber (15) entlang der Betätigungsrichtung (17) verschiebbar angeordnet ist und durch die Durchtrittsfläche (14) in die Messkammer (11) hineinragt.

5. Pneumatischer Bremskraftverstärker (1) nach Anspruch 3 **dadurch gekennzeichnet, dass** der Drucksensoranordnung (7) ein zweiter Stellungsgeber (19) und ein zweites Sensorelement (20) zugeordnet sind, wobei das zweite Stellungsgeber (19) mit dem zweiten Sensorelement (20) berührungslos zusammenwirkt und wobei der zweiter Stellungsgeber (19) mit dem verschiebbaren Boden (12) gekoppelt oder an diesem angeordnet vorgesehen ist.

6. Pneumatischer Bremskraftverstärker (1) nach Anspruch 2 **dadurch gekennzeichnet, dass** die Drucksensoranordnung (7) als ein druckempfindlicher Sensor (21) zum direkten Detektieren von einem Druckniveau in der Messkammer (11) vorgesehen ist.

7. Pneumatischer Bremskraftverstärker (1) nach Ansprüchen 4 und 5 oder 4 und 6 **dadurch gekennzeichnet, dass** das erste Sensorelement (16) mit dem zweiten Sensorelement (20) oder das erste Sensorelement (16) mit dem druckempfindlichen Sensor (21) Bestandteile einer gemeinsamen Leiterplatte (22) sind.

8. Pneumatischer Bremskraftverstärker (1) nach Anspruch 3 **dadurch gekennzeichnet, dass** der elastisch verformbare Teilbereich (18) der Wandung (13) als ein Metallfaltenbalg ausgebildet ist.

9. Pneumatischer Bremskraftverstärker (1) nach Anspruch 3 **dadurch gekennzeichnet, dass** der elastisch verformbare Teilbereich (18) der Wandung (13) als ein Elastomerbalg ausgebildet ist.

10. Pneumatischer Bremskraftverstärker (1) nach Ansprüchen 4 und/oder 5 **dadurch gekennzeichnet, dass** der Stellungsgeber (15,19) als ein Magnetelement ausgebildet ist und das Sensorelement (16,20) als ein Hall-Element ausgebildet ist.

11. Pneumatischer Bremskraftverstärker (1) nach Ansprüchen 4 und/oder 5 **dadurch gekennzeichnet, dass** der Stellungsgeber (15,19) als ein Metallelement ausgebildet ist und der Sensorelement (16,20) als eine elektrische Spule oder eine elektrische Leiterschleife ausgebildet ist.

12. Pneumatischer Bremskraftverstärker (1) nach Anspruch 3 **dadurch gekennzeichnet, dass** der erste Stellungsgeber (15) an einem Trägerelement (24) angeordnet vorgesehen ist, wobei das Trägerelement (24) an einer beweglichen Wand (3) befestigt oder an der beweglichen Wand (3) abgestützt und mit dieser bewegbar ist.

13. Pneumatischer Bremskraftverstärker (1) nach Anspruch 12 **dadurch gekennzeichnet, dass** das Trägerelement (24) wenigstens zwei Trägerbauteile (25,26) aufweist, wobei ein Trägerbauteil an dem anderen Trägerbauteil beweglich, insbesondere teleskopierbar, geführt ausgebildet ist und wobei wenigstens ein elastisches Element (27) zwischen den beiden Trägerbauteilen (25,26) vorgespannt angeordnet ist.

## Claims

1. Pneumatic brake booster (1), in particular for motor vehicle brake systems, having a booster housing (2) which is divided into at least one negative-pressure chamber (4) and at least one working chamber (5) by at least one wall (3) which can be acted on with a pneumatic pressure differential and which is supported on a control housing (9) and which is movable along an actuating direction (13), having a travel sensor arrangement (6) for monitoring position and movement of at least one movable wall (3) and having a pressure sensor arrangement (7) for monitoring a pressure level in at least one negative-pressure chamber (4), wherein the travel sensor arrangement (6) and the pressure sensor arrangement (7) provide electrical signals to an electronic control unit (8), **characterized in that** the travel sensor arrangement (6) and the pressure sensor arrangement (7) are arranged in combined form in a common module housing (10), wherein the module housing (10) is provided so as to be attached to the brake booster (1).

2. Pneumatic brake booster (1) according to Claim 1, **characterized in that** a measuring chamber (11) is provided within the module housing (10), wherein the measuring chamber (11) has a base (12), a wall (13) and a passage area (14) for the pneumatic connection of the measuring chamber (11) to at least one negative-pressure chamber (4).

3. Pneumatic brake booster (1) according to Claim 2, **characterized in that** at least one subregion (18) of the wall (13) is of elastically deformable design, wherein the base (12) is displaceable in a manner dependent on a deformation of the subregion (18), and wherein the wall (13) and the base (12) are, at the outer side, at least partially acted on with an ambient atmospheric pressure Pa.

4. Pneumatic brake booster (1) according to Claim 2, **characterized in that** the travel sensor arrangement (6) is assigned a first position encoder (15) and a first sensor element (16), wherein the first position encoder (15) interacts contactlessly with the first sensor element (16), and wherein the first position encoder (15) is arranged so as to be displaceable along the actuating direction (17) and projects through the passage area (14) into the measuring chamber (11).

5. Pneumatic brake booster (1) according to Claim 3, **characterized in that** the pressure sensor arrangement (7) is assigned a second position encoder (19) and a second sensor element (20), wherein the second position encoder (19) interacts contactlessly with the second sensor element (20), and wherein the second position encoder (19) is provided so as to be coupled to or arranged on the displaceable base (12).

6. Pneumatic brake booster (1) according to Claim 2, **characterized in that** the pressure sensor arrangement (7) is provided as a pressure-sensitive sensor (21) for directly detecting a pressure level in the measuring chamber (11).

7. Pneumatic brake booster (1) according to Claims 4 and 5 or 4 and 6, **characterized in that** the first sensor element (16) with the second sensor element (20), or the first sensor element (16) with the pressure-sensitive sensor (21), are constituent parts of a common circuit board (22).

8. Pneumatic brake booster (1) according to Claim 3, **characterized in that** the elastically deformable subregion (18) of the wall (13) is formed as a metal corrugated bellows.

9. Pneumatic brake booster (1) according to Claim 3, **characterized in that** the elastically deformable subregion (18) of the wall (13) is formed as an elastomer bellows.

10. Pneumatic brake booster (1) according to Claims 4 and/or 5, **characterized in that** the position encoder (15, 19) is formed as a magnet element, and the sensor element (16, 20) is formed as a Hall element.

11. Pneumatic brake booster (1) according to Claims 4 and/or 5, **characterized in that** the position encoder (15, 19) is formed as a metal element, and the sensor element (16, 20) is formed as an electrical coil or an electrical conductor loop.

12. Pneumatic brake booster (1) according to Claim 3, **characterized in that** the first position encoder (15) is provided so as to be arranged on a carrier element (24), wherein the carrier element (24) is fastened to a movable wall (3) or supported on the movable wall (3) and movable together therewith.

13. Pneumatic brake booster (1) according to Claim 12, **characterized in that** the carrier element (24) has at least two carrier components (25, 26), wherein one carrier component is formed so as to be guided movably, in particular telescopically, on the other carrier component, and wherein at least one elastic element (27) is arranged in preloaded fashion between the two carrier components (25, 26).

## Revendications

1. Servofrein pneumatique (1), en particulier pour des installations de freinage de véhicules automobiles, avec un boîtier de servofrein (2), qui est divisé en au moins une chambre en dépression (4) et au moins une chambre de travail (5) par au moins une paroi (3) pouvant être soumise à une pression différentielle pneumatique, prenant appui sur un boîtier de commande (9) et mobile le long d'une direction d'actionnement (13), avec un agencement de capteur de course (6) pour la surveillance de la position et du mouvement d'au moins une paroi mobile (3) et un agencement de capteur de pression (7) pour la surveillance d'un niveau de pression dans au moins une chambre en dépression (4), dans lequel l'agencement de capteur de course (6) et l'agencement de capteur de pression (7) envoient des signaux électriques à une unité de commande électronique(8), **caractérisé en ce que** l'agencement de capteur de course (6) et l'agencement de capteur de pression (7) sont disposés ensemble dans un boîtier modulaire commun (10), dans lequel le boîtier modulaire (10) est prévu en montage sur le servofrein (1).

2. Servofrein pneumatique (1) selon la revendication 1, **caractérisé en ce qu'**il est prévu une chambre de mesure (11) à l'intérieur du boîtier modulaire (10), dans lequel la chambre de mesure (11) présente un fond (12), une paroi (13) et une face de passage (14) pour la liaison pneumatique de la chambre de mesure (11) à au moins une chambre en dépression (4).

3. Servofrein pneumatique (1) selon la revendication 2, **caractérisé en ce qu'**au moins une région partielle (18) de la paroi (13) est élastiquement déformable, dans lequel le fond (12) est déplaçable en fonction d'une déformation de la région partielle (18) et dans lequel la paroi (13) et le fond (12) sont exposés extérieurement au moins en partie à une pression atmosphérique ambiante Pa.

4. Servofrein pneumatique (1) selon la revendication 2, **caractérisé en ce qu'**un premier détecteur de position (15) et un premier élément de capteur (16) sont associés à l'agencement de capteur de course (6), dans lequel le premier détecteur de position (15) coopère sans contact avec le premier élément de capteur (16) et dans lequel le premier détecteur de position (15) est déplaçable le long de la direction d'actionnement (17) et pénètre dans la chambre de mesure (11) à travers la face de passage (14).

5. Servofrein pneumatique (1) selon la revendication 3, **caractérisé en ce qu'**un deuxième détecteur de position (19) et un deuxième élément de capteur (20) sont associés à l'agencement de capteur de pression (7), dans lequel le deuxième détecteur de position (19) coopère sans contact avec le deuxième élément de capteur (20) et dans lequel le deuxième détecteur de position (19) est prévu pour être couplé au fond déplaçable (12) ou disposé sur celui-ci.

6. Servofrein pneumatique (1) selon la revendication 2, **caractérisé en ce que** l'agencement de capteur de pression (7) est prévu comme un capteur sensible à la pression (21) pour la détection directe d'un niveau de pression dans la chambre de mesure (11).

7. Servofrein pneumatique (1) selon les revendications 4 et 5 ou 4 et 6, **caractérisé en ce que** le premier élément de capteur (16) avec le deuxième élément de capteur (20) ou le premier élément de capteur (16) avec le capteur sensible à la pression (21) sont des composants d'une plaquette de circuits imprimés commune (22).

8. Servofrein pneumatique (1) selon la revendication 3, **caractérisé en ce que** la région partielle élastiquement déformable (18) de la paroi (13) est constituée par un soufflet métallique à plis.

9. Servofrein pneumatique (1) selon la revendication 3, **caractérisé en ce que** la région partielle élastiquement déformable (18) de la paroi (13) est constituée par un soufflet en élastomère.

10. Servofrein pneumatique (1) selon les revendications 4 et/ou 5, **caractérisé en ce que** le détecteur de position (15, 19) et l'élément de capteur (16, 20) est constitué par un élément de Hall.

11. Servofrein pneumatique (1) selon les revendications 4 et/ou 5, **caractérisé en ce que** le détecteur de position (15, 19) est constitué par un élément métallique et l'élément de capteur (16, 20) est constitué par une bobine électrique ou une boucle de conducteur électrique.

12. Servofrein pneumatique (1) selon la revendication 3, **caractérisé en ce que** le premier détecteur de position (15) est prévu sur un élément de support (24), dans lequel l'élément de support (24) est fixé sur une paroi mobile (3) ou est supporté sur la paroi mobile (3) et est déplaçable avec celle-ci.

13. Servofrein pneumatique (1) selon la revendication 12, **caractérisé en ce que** l'élément de support (24) présente au moins deux composants de support (25, 26), dans lequel un composant de support est guidé de façon mobile sur l'autre composant de support, en particulier de façon télescopique, et dans lequel au moins un élément élastique (27) est disposé sous précontrainte entre les deux composants de support (25, 26).
